# EUROPEAN PATENT APPLICATION

(11) **EP 4 822 966 A1**
(43) Date of publication of application: **14.10.2026**
(21) Application number: 25170104.1
(22) Date of filing: 11.04.2025
(51) Int. Cl.: H02M 1/00, H02M 3/00, H02M 3/335, H02K 55/00

(54) **POWER SUPPLY FOR PRODUCING AUXILIARY SUPPLY VOLTAGES AT CRYOGENIC TEMPERATURES, AIRCRAFT AND USE OF THE POWER SUPPLY TO CONTROL AN ELECTRIC MOTOR OPERATING AT CRYOGENIC TEMPERATURES**

(71) Applicant: Airbus S.A.S., 31700 Blagnac (FR)
(72) Inventor: Steiner, Gerhard, 82024 Taufkirchen (DE); Kapaun, Florian, 82024 Taufkirchen (DE); Dahmen, Christopher, 82024 Taufkirchen (DE)
(74) Representative: OTN Airbus SAS

(57) **Abstract**

In order to provide a power supply circuit which reliably functions in a cryogenic environment, the invention provides a power supply (10) for producing electrically isolated auxiliary supply voltages at cryogenic temperatures. The power supply (10) comprising an input power supply (11) supplying electric power to a power stage (14), an oscillation circuit (19) coupled to the power stage (14) and a transformer (20) comprising at least one primary winding (21) and at least one secondary winding (22). The primary winding (21) is coupled to a capacitive half bridge (23) and the secondary winding (22) is coupled to a plurality of outputs, each output comprising a rectifier (27) and an auxiliary supply terminal (28).

## Description

The invention relates to a power supply for producing auxiliary supply voltages at cryogenic temperatures; an aircraft and to the use of a power supply to control an electric motor operating at cryogenic temperatures.

For some applications, e.g. driving an electric motor formed of superconductive material, it may be desirable to place some or all of the electronic circuitry for driving the electric motor in the part of the application that is at cryogenic temperatures rather than in the part of the application that is a room temperature.

The published US patent application US 2022/0225301 A1 describes a magnet assembly comprising a superconducting coil, a cryogenic system, a DC voltage source, a SMPS (Switched Mode Power Supply), current leads, and a controller. The cryogenic system comprises a cryostat and is configured to maintain the superconducting coil at an operating temperature below the critical temperature of the superconductor. The DC voltage source is located outside the cryostat. The SMPS is located inside the cryostat and configured to supply power from the DC voltage source to the superconducting coil.

Circuitry that is developed and provides certain functions at room temperature, operates differently at cryogenic temperatures, if at all.

It is, therefore, an object of the invention to provide a power supply circuit that is suitable for use at cryogenic temperatures and that operates reliably at cryogenic temperatures.

This object is solved by the subject matter of the independent claims. Further advantageous embodiments are the subject matter of the dependent claims. According to the invention a power supply for producing electrically isolated auxiliary supply voltages at cryogenic temperatures is provided. The power supply comprises an input power supply supplying electric power to a gate driver circuit, an oscillation circuit coupled to the gate driver circuit and a transformer comprising at least one primary winding and at least one secondary winding. The primary winding is coupled to a capacitive half bridge. The secondary winding is coupled to a plurality of outputs. Each output comprises a rectifier and an auxiliary supply terminal.

Cryogenic temperatures are defined herein as a temperature in the range of 2K to 100 K.

An example of an auxiliary supply voltage is a gate supply voltage for the gate of a transistor device.

The invention provides a power supply circuit design which reliably functions in a cryogenic environment. Furthermore, the invention optimizes the weight, size, complexity and performance of a power supply system with multiple outputs, while considering high tolerances and any reduction in the performance of components operating at cryogenic temperatures. The overall component count of the supply system is minimized. The power supply system may be an auxiliary supply system, for example, of an aircraft.

A cryogenic suitable topology with robustness to high component tolerances is used. A control loop is not used so that problems with components malfunctioning or instabilities in cryogenic environment are avoided. Output overvoltage protection can be omitted as the output voltage is directly linked to the input voltage and the transformer winding ratio. Reliable cryogenic frequency generation and suitable duty cycle tolerances at cryogenic temperatures are achieved in a topology with only one frequency generator and only one power stage for bipolar excitation of the core. Even at very different duty cycles, saturation effects of the transformer are avoided due to capacitive coupling, because of the missing DC path.

In embodiments, the power supply comprises two or more branches. Each branch may have the same components. In some embodiments, e.g. for providing a gate supply voltage, each branch has the same components. In other embodiments, at least one of the branches may have different components from the other branches. Each branch comprises a transformer comprising at least one primary winding and at least one secondary winding. The primary winding is coupled to a capacitive half bridge and the secondary winding is coupled to a plurality of outputs. Each output comprises a rectifier and an auxiliary supply terminal which is configured to supply an isolated auxiliary supply voltage.

In an embodiment, each branch comprises a transformer comprising at least one primary winding that is coupled to one capacitive half bridge and inductively coupled to two or more secondary windings that are coupled to a plurality of outputs, each output comprising a rectifier and a auxiliary supply terminal configured to supply an isolated auxiliary supply voltage.

In an embodiment, when using the power supply to control an electric motor operating at cryogenic temperatures, the input power supply is situated and operates at room temperature and the power stage, the oscillation circuit, the branches including the transformer and the plurality of outputs are situated in and operate at cryogenic temperatures.

Preferably, components or technologies which are known to show problems, malfunctioning or even stop working under a cryogenic environment are avoided.

Preferably, the transformer comprises a core with an air gap and may comprise material having a relative permeability at 77K, µᵣ (77K), wherein 50 ≤ µᵣ (77K) ≤ 1000. An example of such a material is a ferrite such as a manganese zinc ferrite.

Preferably, the transformer comprises a ferrite core with an air gap. In an embodiment, the core comprises an airgap and a manganese zinc ferrite, for example an oxide formed of magnetic zinc and iron. The relative permeability of ferrite is known to decrease with decreasing temperatures. This effect of the reduction in the relative permeability of the ferrite material on the overall permeability is reduced by the serial connection of the reluctance. The impact of the µr reduction caused by the cryogenic temperatures on the effective inductance value of the transformer is reduced. The impact of the reduction of the µr of the material on the overall inductance is lowered because the airgap shows a high percentage of the complete magnetic loop resistance. A sufficient µr value is provided for the intended application. For operation at cryogenic temperatures, the value of the high temperature µr of the core material is less important than the lower (residual one) at cryogenic temperatures. This enables the use of ferrite materials in a cryogenic environment and the design of small, lightweight and easy-to-mount transformers based on ferrite materials. Higher magnetic losses at cryogenic temperatures are less important because of the lower mass of small ferrite cores compared to the smallest nanocrystalline or amorphous ones. Coil formers for isolated power supplies and some available transformer components for the industry and automotive temperature range are therefore applicable again.

In an embodiment, the ferrite core comprises first and second E-shaped parts with an air gap. In an embodiment, the ferrite core comprises an air gap in the centre portion of one or both of the first and second E-shaped parts. The air gap may be ground into the centre portion, for example. The at least one primary winding and the at least one secondary winding are formed on the core former.

Preferably, the primary winding is coupled to a capacitive half bridge and is inductively coupled to two or more secondary windings. If the power supply comprises two or more branches, then each branch comprises a transformer with one or more primary windings, each primary winding is coupled to one capacitive half bridge and inductively coupled to two or more secondary windings. The primary winding of each of the transformers is coupled to the first node of the half bridge circuit.

The capacitive half bridge comprises a first capacitor coupled at a first node to a second capacitor and the primary winding is coupled to the node of the capacitive half bridge. A capacitive half bridge has the advantage that there is no DC path. This leads to no slow magnetization of the core which can lead to core saturation. The capacitive coupling at a particular frequency of operation leads to limitation of the energy transfer. The output current is likewise limited by the capacitors.

In an embodiment, the power stage comprises a half bridge circuit. The half bridge circuit comprises a first transistor device coupled at a second node to a second transistor device. The primary windings are coupled to the second node of the half bridge circuit. The half bridge circuit may be coupled between the low voltage terminal and high voltage terminal of the input power supply.

The invention also provides an aircraft comprising the power supply of any one of the embodiments described herein.

In some embodiments, the aircraft comprises an electric motor operating at cryogenic temperatures that is coupled indirectly to the power supply. The auxiliary supply voltages are received by an inverter which is used to control the electric motor. In some embodiments, the input power supply is situated in and operating at room temperature and the remainder of the power supply circuit or any one of the embodiments described herein including the power stage, the oscillation circuit, the transformer(s) and the plurality of outputs and the electric motor are situated in and operating at cryogenic temperatures.

The electric motor may be used in an aircraft, e.g., in a propulsion drive of an aircraft or a propulsion hybrid drive of an aircraft or in an auxiliary drive of an aircraft. The aircraft may be a fixed-wing aeroplane, for example.

The invention also provides the use of the power supply of any one of the embodiments described herein to provide auxiliary supply voltages to an inverter that is used to control an electric motor operating at cryogenic temperatures.

In an embodiment, when using the power supply to control an electric motor operating at cryogenic temperatures, the input power supply is at the environment temperature and the power stage, the oscillation circuit, the transformer and the plurality of outputs are at cryogenic temperatures. The environment temperature is greater than cryogenic temperatures. The temperature of the environment may be those found in aviation applications.

In an embodiment, the input power supply is located in a typical avionic temperature range and the gate driver circuit, the oscillation circuit, the transformer and the plurality of outputs are located at a temperature between 2K and 373K.

In an embodiment, the circuit is used to drive an electric motor. The electric motor may be used in an aircraft, e.g., in a propulsion drive of an aircraft or a propulsion hybrid drive of an aircraft or in an auxiliary drive of an aircraft. The aircraft may be a fixed-wing aeroplane, for example.

Power supply systems with multiple isolated outputs are commonly based on magnetic power transfer and a control loop to control the output voltages. Components for power supply systems are, however, typically not specified for cryogenic temperatures. This leads to some issues to be addressed when designing and providing a power supply circuit which is to operate at cryogenic temperatures.

For some topologies, component values require low tolerances, especially in resonant designs. However, due to the temperature dependence of components and the lack of material specifications for cryogenic temperatures, high tolerances cannot be avoided. This compromises reliable operation. For low power applications flyback topologies are often selected due to the low cost, as only one magnetic device is needed. For this topology, an overvoltage protection at the output is provided to limit the voltage in case of control malfunctioning, e.g. control loop problems. Other compact, lightweight designs combine multiple outputs to minimize component count while keeping the required functionality. Bipolar magnetization of the transformer core may be used to minimize weight and outlines. A single transformer may be used for multiple outputs. This approach lacks flexibility in terms of short circuit current values of the different outputs as well as cross-regulation performance of the different branches. The usual approach without an air gap is sensitive to duty cycle tolerances, i.e. tolerances of the positive to the negative duty cycle, which lead to magnetic saturation. For power transfer with the lowest transformer weight, bipolar modulation of the magnetic core is used. Usually, ungapped cores with high specific Al inductance but low saturation current values are used to minimize the necessary turns count of each winding. This implies the need for an exact duty cycle for identical positive and negative excitation of the core to avoid saturation effects. Also, some commonly used component technologies, especially semiconductor technologies like bipolar, BJT's, do not function at cryogenic temperature so that such technologies have to be avoided.

In summary, there are lots of limitations for cryogenic electronics and systems which prevent existing designs and technologies from proper operation in a cryogenic environment.

To at least mitigate or overcome these issues, the invention provides a cryogenic, multi-output power supply topology with only one oscillation circuit and only one power stage is provided. The circuit has multi-isolated output voltages to primary and between each branch.

Embodiments will be now be described with reference to the drawings, in which:
Fig. 1 illustrates an aircraft, and
Fig. 2 illustrates a block view of a power supply according to the invention.
Fig. 3 illustrates a circuit diagram and effect of capacitance on voltage ripple.

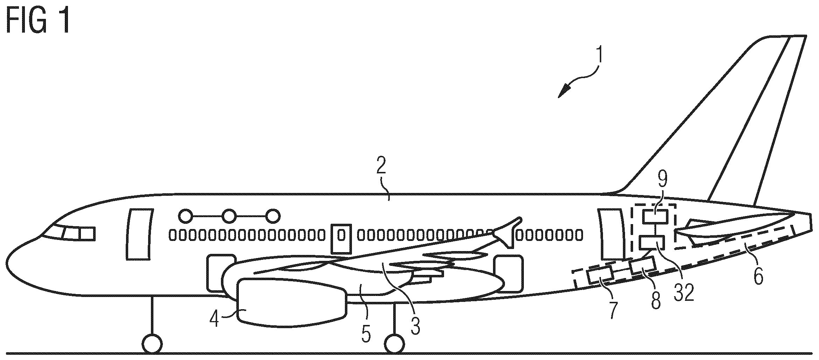

Fig. 1 illustrates a schematic view of an aircraft 1 in the form of a fixed wing aeroplane. The aircraft 1 has a fuselage 2, wings 3 which extend from each of the opposing sides of the fuselage 2, at least one main drive 4 for powering the aircraft 1 to flight and at least one fuel tank 5. The main drive 4 may be an electric drive or hybrid drive and may also be referred to as a propulsion drive. The hybrid drive may comprise an electric drive and a jet engine, for example. In addition to the main drive 4, the aircraft may include one or more auxiliary drives 6 which may be electrically driven. The electric drive 4, 6 may include a source 7 of electric power. The source 7 may comprise one or more fuel cells 7 which supply electricity to an electric motor 8. The fuel cells 7 receive hydrogen and oxygen and convert chemical energy into electrical energy, which results from the reaction of hydrogen in the presence of oxygen. Hydrogen is generally obtained from a hydrogen tank on board the aircraft 1 and oxygen may be taken from the ambient air.

The term fuel cell is used to herein encompass arrangements including a stack of fuel cells. Any type of fuel cell suitable for the application may be used. Individual fuel cells may produce relatively small electrical potentials so that the fuel cells are "stacked", or placed in series, to create sufficient voltage to meet an application's requirements.

A motor control unit 9 is coupled to the electric motor 8 and is used to control the electric motor 8. The motor control unit 9 may comprise a power supply circuit 10 for producing auxiliary supply voltages to an inverter 32. For example, the auxiliary supply voltage may be a gate supply voltage for switching the gate of a transistor device. The transistor device may be part of the inverter 32. The inverter 32 may be part of the motor control unit 9 for controlling the electric motor 8.

In some embodiments, the electric motor 8 operates at cryogenic temperatures, i.e. between 2K and 100K. In some embodiments, the electric motor 8 operates at temperatures in the range of 2K to 373K. It is advantageous to place at least some of the components of the power supply circuit 10 close to the electric motor 8. These components may then be located in and operated at these cryogenic temperatures. Thus, the power supply circuit 10 may be designed to improve the performance when operating at cryogenic temperatures.

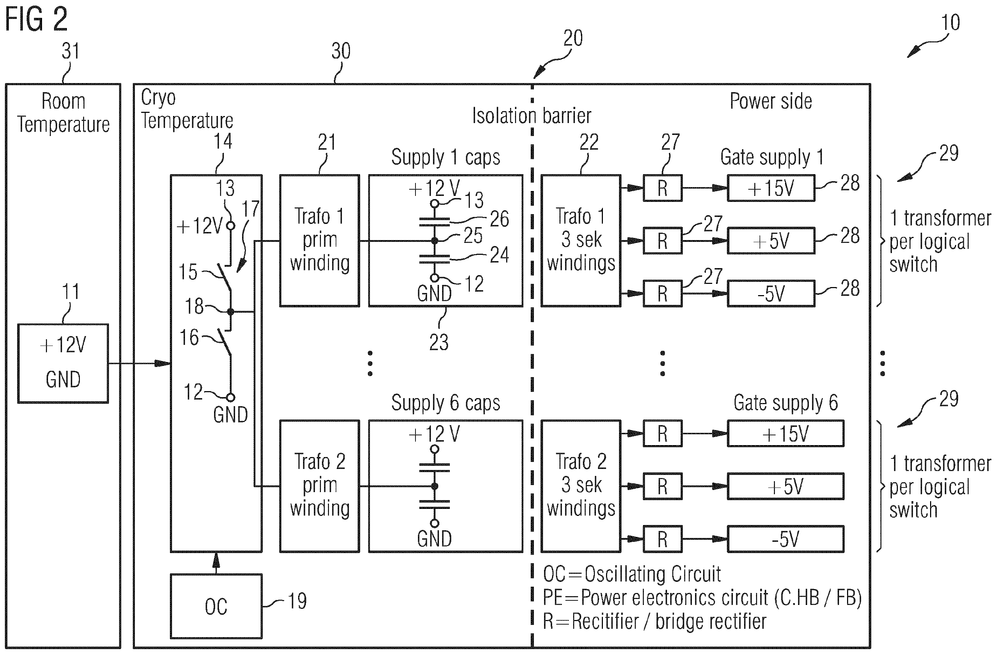

Fig. 2 illustrates a power supply circuit 10 according to an embodiment which may be used in the electric drive 4, 6 of the aircraft 1.

The power supply circuit 10 comprises an input power supply 11. This input power supply 11 is coupled between a low voltage bus 12, e.g. ground, at a high voltage bus 13, e.g. 12V terminal. The input power supply 11 is coupled to a power stage 14. The power stage 14 comprises a half bridge 15 that is coupled between ground bus 12 and the high voltage bus 13. The half bridge circuit 15 comprises a first transistor device 16 that is coupled between the ground bus 12 and a first node 18 and a second transistor device 17 that is coupled between the first mode 18 and the high voltage bus 13. An oscillation circuit 19 is provided which is used to switch the gates of the first and second transistor devices 16, 17.

The power supply circuit 10 further comprises a transformer 20 which comprises at least one primary winding 21 and at least one secondary winding 22. In the illustrated embodiment, one primary winding 21 and three secondary windings 22 are provided.

In some embodiments, the transformer 20 comprises a ferrite core, for example formed of sintered magnesium zinc ferrite, which has an air gap.

The input of the primary winding 21 of the transformer 20 is coupled to the first node 18 of the half bridge circuit 15. The output of the primary winding is connected to a capacitive half bridge circuit 23. The capacitive half bridge circuit 23 includes a first capacitor 24 that is coupled between ground bus 12 and a second node 25 and a second capacitor 26 is coupled to the node 25 and the high-voltage bus 13. The output of the primary winding is connected to the second node 25. The primary winding 21 is inductively coupled to the secondary windings 22 of the transformer 20 but is electrically isolated from the secondary windings 22. Each secondary winding 22 is connected to a bridge rectifier 27 which is in turn connected to a gate terminal 28. A half-cycle rectifier may be used instead of one or more of the bridge rectifiers. In the illustrated embodiment, each of the secondary windings 22 has the same structure so that three auxiliary supply terminals 28 are provided for the transformer 20. The output terminals 28 provide auxiliary supply terminals which may, for example, have a voltage of + 15 V, + 5 V and -5 V. The auxiliary supply terminals 28 may be used to supply auxiliary voltages to an inverter 32. This inverter 32 may be used to control an electric motor, for example the electric motor 8 of the main drive 4 or auxiliary drive 6 of the aircraft 1.

In another embodiment, the secondary windings may have different structures. For example, the secondary winding which supplies a voltage of + 5V may comprise a centre-tapped winding and a half-cycle rectifier.

The power supply 10 may include more than one transformer 20. In these embodiments, the power supply 10 includes two or more branches 29. Each of the branches 29 comprises a transformer 20 with its primary winding 21, capacitive bridge 23, secondary windings 22 and multiple output paths each with a bridge rectifier 27 and an auxiliary supply voltage terminal 28. Each of the branches 29 has the same structure. One branch and, therefore, one transformer 20 is provided for each logical switch. Each logical switch has three auxiliary supply terminals 28 supplying a different gate voltage, e.g. a gate voltage of + 15 V, + 5 V and -5 V.

In Fig. 2, two of the six branches are shown. Each of the branches 29, in particular the input of the primary winding 21, is connected to the first node 18 of the half bridge circuit 15. The auxiliary voltages supplied at the auxiliary output terminals 28 are electrically isolated due to the transformer 20 in that branch 29.

The oscillator 19, the power stage 14, the transformer 29, the rectifier 27 and the auxiliary supply voltage terminals 28 are located in a cryogenic temperature range, as indicated in Fig. 2 by the box 30. In contrast, the input power supply 11 is located at the temperature of the environment, as indicated in Fig. 2 by the box 31. The temperature of the environment may be in the range of typical avionic temperatures which are greater than the cryogenic temperature range. Thus, the power supply circuit 10 includes only a single change in temperature which improves the reliability.

The circuit may be operated at a frequency which lies in the range of 100 kHz to 200 kHz, for example. The cryogenic temperature may lie within the range of 2 K to 100 K. For example, the cryogenic temperature may be 77 K, so that liquid nitrogen can be used for cooling. Lower temperatures, for example 35K, may be provided using a compressed helium cryostat.

In an embodiment, the oscillator 19, the power stage 14, the transformer 29, the rectifier 27 and the auxiliary supply voltage terminals 28 are located in a temperature range, as indicated in Fig. 2 by the box 30, which is less than the temperature in which the input power supply 11 is located. The operation range of the circuit may be greater than the cryogenic temperature range so that the circuit may not only operate in the cryogenic temperature range but also at higher temperatures including typical avionic temperatures and room temperature.

A capacitive half bridge 23 is used for the cryogenic supply topology because this provides no path for DC current at the primary side of the transformer 20 due capacitive coupling. The circuit 10 is also robust to effects which lead to saturation, e.g. unsymmetrical duty cycles. Also, the maximum Rms primary current is limited by the capacitors. Secondary current limitation is provided as there is limited energy transport capability due to capacitive coupling. Only the charge of the capacitors 24, 26 can be transferred at one cycle. The secondary voltage is defined by primary voltage and transformer winding ratio so that there is no or little risk of high secondary. voltages compared to flyback principle.

By choosing a cryo-optimized capacitive half bridge 23 with common primary switches 15 and separated transformers 20 and capacitors 24, 26, the following advantages are feasible in cryogenic environment: The complexity and the components count of the supply system 10 are minimized and reliability is optimized. No highly integrated or complex integrated circuits are needed so that there is a reduced risk of malfunctions. A low coupling capacitance between primary and secondary 21, 22 of each output of a branch 29 and between the different branches 29 is provided so that coupling between the different logical switches and to ground is minimized. Load dependency and short circuit behaviour of each branch 29 is decoupled from the other branches 29 to provide improved robustness. The invention provides a circuit 10 with fewer components in that only one oscillation circuit 19 and one power stage 14 is used while at the same time providing multiple isolated output voltages 28 for each primary winding 21 and for each branch 29.

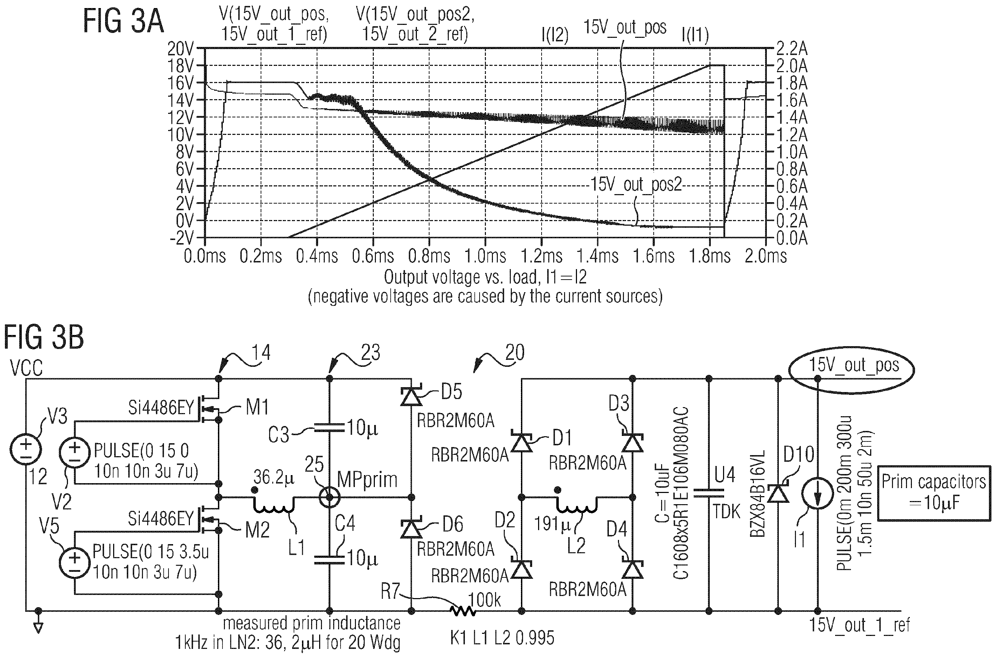

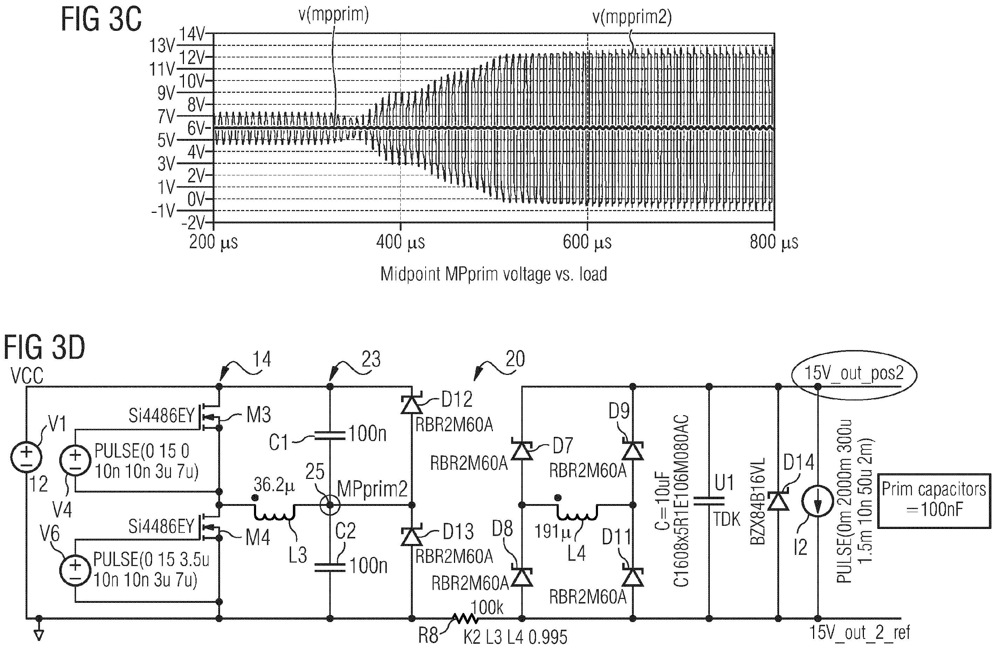

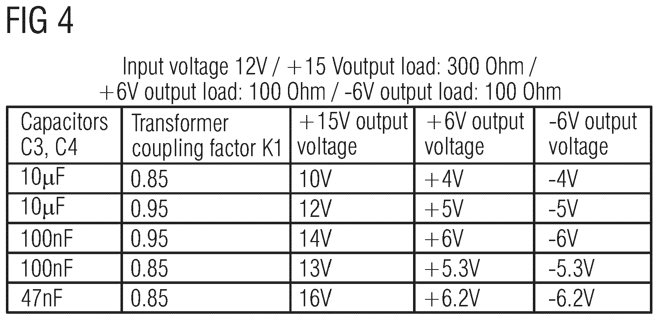

A method to compensate for the load dependence of the transmission chain - such as resistances or low coupling factors of the transformer 20- on the output voltage will now be described with reference to Fig. 3. Fig. 3B illustrates a circuit in which the capacitors C3 and C4 of the half bridge 23 have a capacitance of 10 µF and graph of output voltage against load and Fig. 3D illustrates a circuit in which the capacitors C1 and C2 of the half bridge 23 have a smaller capacitance of 100 nF and a graph of voltage at the node 25 of the half bridge 23 against load.

Fig. 3A illustrates a graph of output voltage as a function of load and show a higher output voltage for a capacitance of 100 nF. Fig. 3B shows a graph of the voltage (Mpprim) at the node 25 of the half bridge 23 as a function of load and shows that the voltage ripple is greater for a capacitance of 100 nF.

To compensate for the load dependence of the transmission chain on the output voltage, the two primary-side capacitors C1/C2 and C3/C4 are selected so that the center point 25 MPprim is not as quiet as possible - as is usual with the half-bridge - but a load-dependent voltage swing is deliberately allowed. This then leads to a load-dependent higher voltage in the primary winding 21 of the transformer 20 and thus also to a higher voltage of the output voltage in the secondary winding 22.

This effect of the voltage swing at the midpoint 25 compensates for the usual load-dependent drop in the output voltage. Another effect is that the maximum voltage swing of MPprim can only move between GND and VCC. Together with the (constant) switching frequency and the selected value of the capacitors C1/C2 or C3/C4, this results in a maximum transferable power and a maximum transferable current.

A comparison of the new operating mode with a conventional operating mode shows that a significantly lower current is generated in the event of a short circuit. This result makes it possible to operate the circuit permanently in a short circuit without significantly affecting reliability. The components are designed in such a way that they can continuously carry the resulting short-circuit current.

As summarised in table 1, the short-circuit current is calculated using the transformation ratio of the transformer, i.e. it is higher for an example 6V output than for an example 15V output. Since the capacitors C3/C4 are significantly smaller compared to a conventional design, the short-circuit current for the selected auxiliary supply application is at a reasonable level.

By modifying the capacitor values used in the capacitive half bridge 23 and/or the transformer coupling coefficient, the output voltage can be influenced; the smaller the capacitors, the higher is the swing at the node 25 of the capacitive half bridge 23. The higher the transformer coupling factor, the higher the output voltage. These effects enable a compensation of the effects of lower transformer coupling factors or losses. Therefore, the load current dependency of the output voltage can be minimised. No change in switching frequency is needed and use of other control principles can be omitted.

To summarize, a flexible, modular approach for a cryo-suited auxiliary power supply with isolated multiple outputs using only few, simple functional bricks is provided. All technologies, components and functions which might not have the desired performance in cryogenic temperatures are avoided. The use of industrial COTS parts for the design is enables due to the robustness of the system to cryogenic temperature-caused tolerances.

### List of reference signs:

- 1: aircraft
- 2: fuselage
- 3: wing
- 4: main drive
- 5: fuel tank
- 6: auxiliary drive
- 7: fuel cell
- 8: electric motor
- 9: motor control unit
- 10: power supply circuit
- 11: input power supply
- 12: ground bus
- 13: high voltage bus
- 14: power stage
- 15: half bridge
- 16: first transistor
- 17: second transistor
- 18: first node
- 19: oscillation circuit
- 20: transformer
- 21: primary winding
- 22: secondary winding
- 23: capacitive half bridge
- 24: first capacitor
- 25: second node
- 26: second capacitor
- 27: rectifier
- 28: output terminal
- 29: branch
- 30: cryogenic area
- 31: room temperature area
- 32: inverter

## Claims

1. A power supply (10) for producing electrically isolated auxiliary supply voltages at cryogenic temperatures, the power supply (10) comprising:
an input power supply (11) supplying electric power to a power stage (14);
an oscillation circuit (19) coupled to the power stage (14);
a transformer (20) comprising at least one primary winding (21) and at least one secondary winding (22), wherein the primary winding (21) is coupled to a capacitive half bridge (23); wherein the secondary winding (22) is coupled to a plurality of outputs, each output comprising a rectifier (27) and an auxiliary supply terminal (28).

2. The power supply (10) according to claim 1, wherein the transformer (20) comprises a ferrite core with an airgap.

3. The power supply (10) according to claim 2, wherein the ferrite core comprises a manganese zinc ferrite.

4. The power supply (10) of any one of claims 1 to 3, further comprising two or more branches (29), wherein each branch (29) comprises a transformer (20) comprising at least one primary winding (21) that is coupled to one capacitive half bridge (23) and inductively coupled to two or more secondary windings (22) that are coupled to a plurality of outputs, each output comprising a rectifier (27) and an isolated auxiliary supply terminal (28).

5. The power supply (10) of any one of claims 1 to 4, wherein the capacitive half bridge (23) comprises a first capacitor (24) coupled at a second node (25) to a second capacitor (26) and the primary winding (21) is coupled to the second node (25).

6. The power supply (10) according to any one of claims 1 to 5, wherein the power stage (14) comprises a half bridge circuit (15), the half bridge circuit (15) comprising a first transistor device (16) coupled at a first node (18) to a second transistor device (17) and the primary windings (21) are coupled to the first node (18) of the half bridge circuit (15).

7. Aircraft (1), comprising the power supply (10) of any one of claims 1 to 6.

8. Use of the power supply (10) of any one of claims 1 to 7 to supply an inverter that controls an electric motor (8) operating at cryogenic temperatures.

9. The use according to claim 8,
wherein the input power supply (11) is located in an avionic temperature range and the power stage (14), the oscillation circuit (19), the transformer (20) and the plurality of outputs are at cryogenic temperatures, wherein the cryogenic temperatures comprise a temperature in the range of 2K to 100K, or
wherein the input power supply (11) is located in an avionic temperature range and the power stage (14), the oscillation circuit (19), the transformer (20) and the plurality of outputs are located at a temperature between 2K and 373K.

10. The use according to claim 8 or claim 9, wherein the electric motor (8) provides a propulsion drive (4) of an aircraft (1) or a propulsion hybrid drive of an aircraft (1) or in an auxiliary drive (6) of an aircraft (1).
